# EUROPÄISCHE PATENTSCHRIFT

(11) **EP 2 569 836 B1**
(45) Veröffentlichungstag und Bekanntmachung des Hinweises auf die Patenterteilung: **17.05.2017**
(21) Anmeldenummer: 11764491.4
(22) Anmeldetag: 05.09.2011
(51) Int. Cl.: H02B 1/38, H02B 1/28

(54) **VERKLEIDUNGSTEIL ZUM ÖFFNEN UND SCHLIESSEN EINER UMKLEIDUNG EINER STROMVERTEILEREINHEIT**
COVERING PART FOR THE OPENING AND CLOSING OF A CASING FOR A CURRENT-DISTRIBUTOR UNIT
HABILLAGE POUR PORTE D'ARMOIRE DE DISTRIBUTION ÉLECTRIQUE

(30) Priorität: 30.09.2010 DE 102010041764
(43) Veröffentlichungstag der Anmeldung: 20.03.2013
(73) Patentinhaber: Siemens Aktiengesellschaft, 80333 München (DE)
(72) Erfinder: MAIER, Josef, 84164 Lengthal (DE)
(86) Internationale Anmeldenummer: PCT/EP2011/065274
(87) Internationale Veröffentlichungsnummer: WO 2012/041644

(56) Entgegenhaltungen:
- EP-A1- 0 684 672
- EP-A1- 1 608 050
- EP-A2- 2 101 019
- GB-A- 2 345 925

## Beschreibung

Die Erfindung betrifft die konstruktive Gestaltung eines insbesondere zum mehrfachen, regelmäßigen Öffnen und Schließen einer Umkleidung einer Stromverteilereinheit vorgesehenen Verkleidungsteils, insbesondere einer Tür oder eines Fensters für eine Stromverteilereinheit. Die Erfindung betrifft weiterhin eine Stromverteilereinheit mit einer aus Verkleidungsteilen gebildeten Umkleidung, bei der zumindest eines der Verkleidungsteile, insbesondere ein Fenster oder eine Tür, zum Öffnen und Schließen der Umkleidung geeignet ist.

Aus der Druckschrift EP 2 101 019 A2 ist eine Stromverteilereinheit mit einem gattungsgemäßen Verkleidungsteil bekannt. Das dort gezeigte Verkleidungsteil in Form einer Tür weist eine Wandung auf, die eine Verkleidungswand und an den vier Seiten der Verkleidungswand jeweils ein Versteifungselement für die Verkleidungswand bildet, wobei jedes der vier Versteifungselemente durch mehrfaches Abbiegen von Flächenteilen der Wandung an jeweils einer der vier Seiten der Verkleidungswand geformt ist. Zusätzlich zu den durch mehrfaches Abbiegen von Flächenteilen der Wandung gebildeten Versteifungselementen sind als zusätzliche Versteifungselemente trapezförmige Versteifungsschienen an der ins Innere der Umkleidung weisenden Wandfläche der Verkleidungswand angeschweißt. Auch die GB 2 345 925 A zeigt ein Verkleidungsteil für eine elektrische Vorrichtung, wobei eine Versteifung der Seiten der Wandung erfolgt.

Aufgabe der Erfindung ist es, ein gattungsgemäßes Verkleidungsteil mit den Merkmalen des Oberbegriffes des Patentanspruches 1 (GB 2 345 925 A) unter Berücksichtigung der Wirtschaftlichkeit stabiler zu gestalten.

Diese Aufgabe wird gemäß der Erfindung durch die Merkmale des kennzeichnenden Teils gelöst. Im Unterschied zu der aus der Druckschrift EP 2 101 019 A2 bekannten Konstruktion, bei der die durch mehrfaches Abbiegen von Flächenteilen der Wandung gebildeten Versteifungselemente an ihrem Umfang einseitig offen sind, können bei dem erfindungsgemäßen Verkleidungsteil durch die an ihrem Umfang geschlossenen Hohlprofile die beim Öffnen und Schließen des Verkleidungsteils auftretenden Kräfte besser auf die Versteifungselemente übertragen und von diesen aufgenommen werden. Hierdurch wird eine höhere Stabilität des Verkleidungsteils bereits ohne zusätzliche Versteifungselemente bewirkt.

Erfindungsgemäss ist bei jedem der Versteifungselemente durch die abgebogenen Flächenteile zusätzlich zu dem Hohlprofil und dem Verbindungsschenkel ein sich an den Verbindungsschenkel anschließender, unter einem Winkel schräg zur Verkleidungswand verlaufender Befestigungsschenkel gebildet, wobei die Befestigungsschenkel der zumindest zwei Versteifungselemente mittels zumindest einer Querverbindung miteinander verbunden sind. Hierdurch wird nicht nur die Stabilität des Verkleidungsteils weiter erhöht, sondern es wird zusätzlich die Möglichkeit geschaffen, von außen nicht sichtbare Anbauteile (Rückanbauten) an der zumindest einen Querverbindung anzubringen.

Bei einer bevorzugten Ausgestaltung des neuen Verkleidungsteils ist vorgesehen, dass die Hohlprofile und/oder die Verbindungsschenkel der zumindest zwei Versteifungselemente an einer ersten Ecke in einem Winkel stirnseitig aufeinander treffend, insbesondere durch Ausschweißen, verbunden sind.

Insbesondere ist vorgesehen, an allen Seiten der Verkleidungswand jeweils ein Versteifungselement für die Verkleidungswand auszubilden, wobei jedes der Versteifungselemente durch mehrfaches Abbiegen von Flächenteilen der Wandung an jeweils einer der Seiten der Verkleidungswand geformt ist, wobei bei jedem der Versteifungselemente durch die abgebogenen Flächenteile jeweils ein Hohlprofil und ein sich an das Hohlprofil anschließender, parallel zur Verkleidungswand verlaufender Verbindungsschenkel gebildet ist, wobei die Verbindungsschenkel und die Verkleidungswand eine Überlappung bildend durch Stoff- und/oder Kraftschluss so verbunden sind, dass die Hohlprofile am Umfang geschlossen sind und wobei die Hohlprofile und/oder die Verbindungsschenkel benachbarter der Versteifungselemente an Ecken in einem Winkel stirnseitig aufeinander treffend, insbesondere durch Ausschweißen verbunden sind, so dass die Versteifungselemente einen geschlossenen umlaufenden Versteifungsstrang bilden. Diese stirnseitige Verbindung dient ebenfalls der weiteren Stabilitätserhöhung des Verkleidungsteils.

Vorzugsweise kann der Bereich der Überlappung zur Integration zusätzlicher Bauteile dienen. So können zumindest zwei der zusätzlichen Bauteile als Riegelstangenführungen ausgebildet sein. Dabei können die Riegelstangenführungen von abgebogenen Laschen zumindest eines der Verbindungsschenkel gebildet sein.

Weiterhin kann zumindest eines der zusätzlichen Bauteile als Dichtung ausgebildet sein.

Die Erfindung soll nachfolgend zum besseren Verständnis anhand in der Zeichnung dargestellter, den Schutzumfang der Erfindung nicht einschränkender Ausführungsbeispiele näher erläutert werden. Dabei zeigen:
- Figur 1: eine Stromverteilereinheit mit einer ersten Ausführungsform eines zum Öffnen und Schließen geeigneten Verkleidungsteils in Form einer Tür,
- Figur 2: eine Wandung des Verkleidungsteils vor einem mehrfachen Abbiegen von Flächenteilen,
- Figuren 3 und 4: vergrößerte Ausschnitte A und B aus der Figur 2,
- Figur 5: die Wandung des Verkleidungsteils gemäß der Figur 2 nach dem mehrfachen Abbiegen der Flächenteile,
- Figur 6: eine erste Schnittdarstellung entlang der Linie VI-VI in Figur 5,
- Figuren 7 und 8: vergrößerte Ausschnitte D und E aus der Figur 6,
- Figur 9: eine zweite Schnittdarstellung entlang der Linie IX-IX in Figur 5,
- Figur 10: einen vergrößerten Ausschnitt F aus der Figur 9,
- Figur 11: einen vergrößerten Ausschnitt C aus der Figur 5,
- Figur 12: eine erste Ausführungsform einer Querverbindung vor einem Abbiegen von Flächenteilen,
- Figuren 13 und 14: zwei verschiedene Ansichten der ersten Ausführungsform der Querverbindung nach dem Abbiegen der Flächenteilen,
- Figur 15: einen Ausschnitt der ersten Ausführungsform des Verkleidungsteils mit der ersten Querverbindung,
- Figur 16: eine Stromverteilereinheit mit einer zweiten Ausführungsform des Verkleidungsteils,
- Figur 17: eine Stromverteilereinheit mit einer dritten Ausführungsform des Verkleidungsteils in Explosionsdarstellung, und
- Figur 18: einen Ausschnitt der dritten Ausführungsform des Verkleidungsteils.

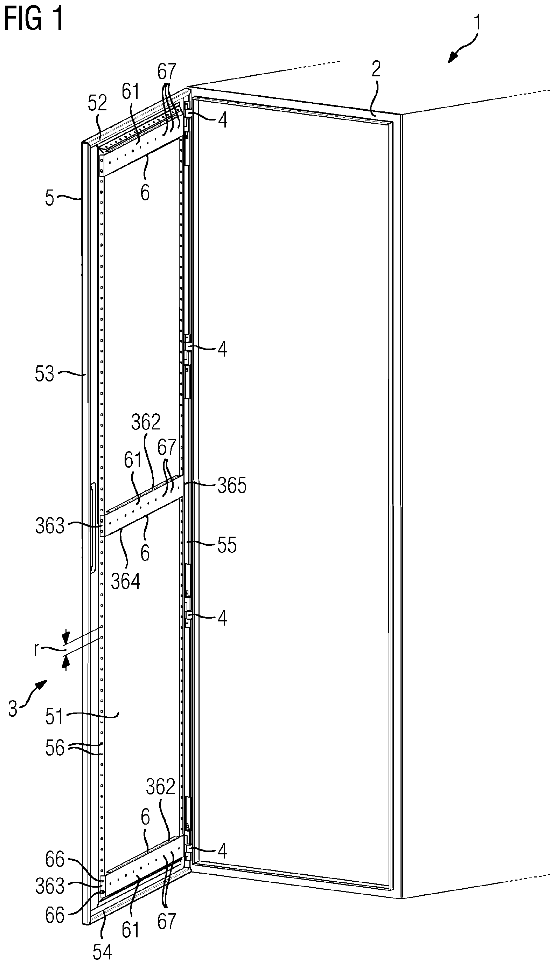

Die Figur 1 zeigt eine Stromverteilereinheit 1 mit einem als Anschlag dienenden frontseitigen Rahmen 2. An dem Rahmen 2 ist eine erste Ausführungsform 3 eines erfindungsgemäßen Verkleidungsteils in Form einer Tür mittels Scharniereinheiten 4 schwenkbar angebracht. Das Verkleidungsteil dient zum mehrfachen und regelmäßigen Öffnen und Schließen einer Umkleidung der Stromverteilereinheit 1.

Die erste Ausführungsform 3 des Verkleidungsteils weist eine Wandung 5 auf, die eine rechteckige Verkleidungswand 51 und an den vier Seiten der Verkleidungswand 51 jeweils ein Versteifungselement 52, 53, 54, 55 für die Verkleidungswand 51 bildet. Zur weiteren Versteifung des Verkleidungsteils dienen drei Querverbindungen in Form schmaler Fachwerk-Querträger 6. Alle drei Querverbindungen (Fachwerk-Querträger 6) verbinden die in Figur 1 vertikal verlaufenden, einander gegenüberliegenden 53, 55 der Versteifungselemente. Zwei dieser Fachwerk-Querträger 6 verbinden zusätzlich jeweils noch eines der in Figur 1 horizontal verlaufenden 52 bzw. 54 der Versteifungselemente mit den Versteifungselementen 53 und 55.

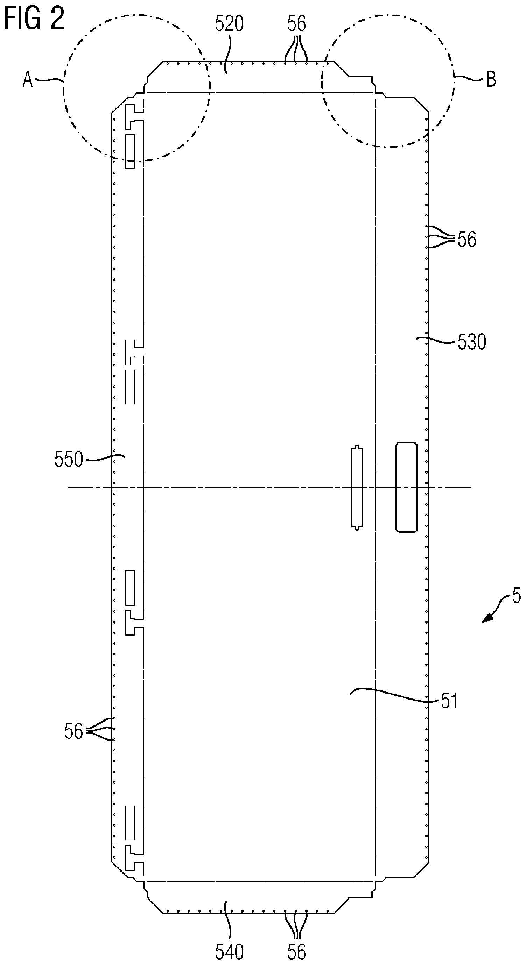

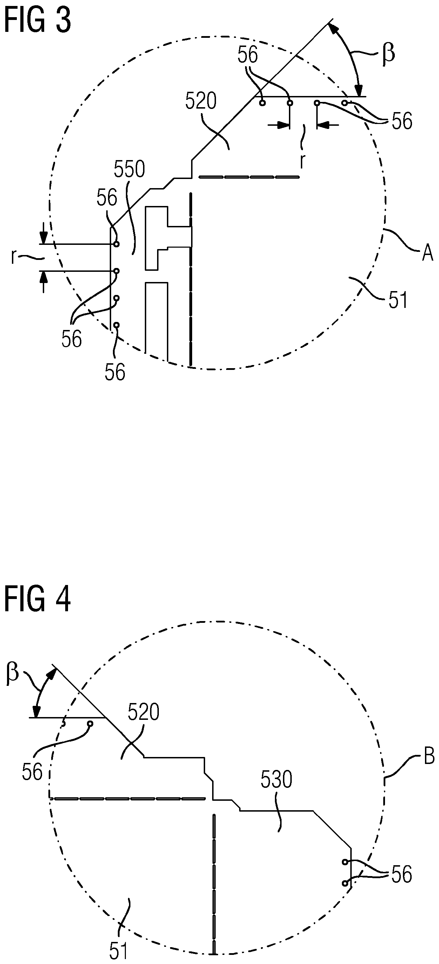

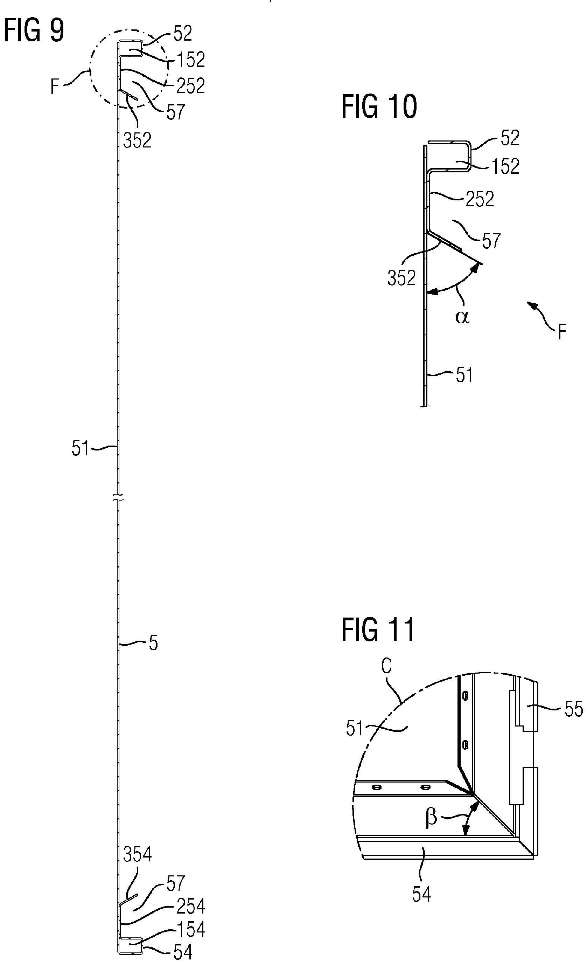

Gemäß den Figuren 2 bis 11 ist jedes der Versteifungselemente 52 bis 55 durch mehrfaches Abbiegen von Flächenteilen 520, 530, 540, 550 der Wandung 5 geformt.

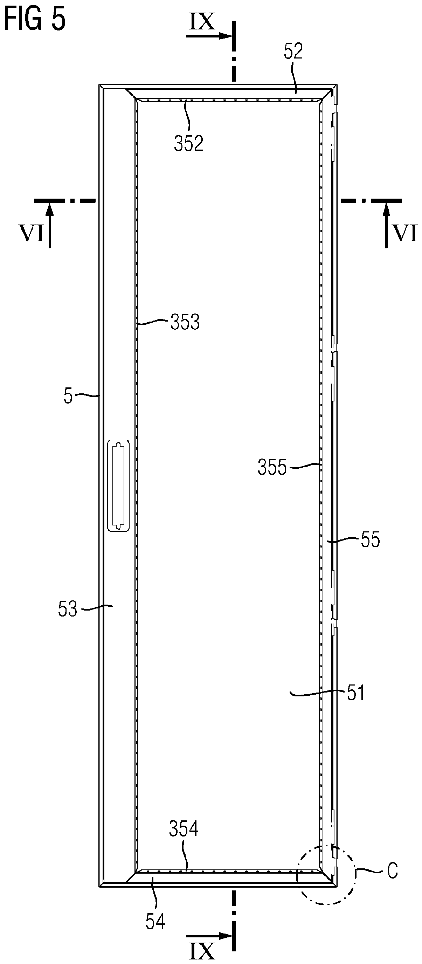

So zeigen die Figuren 2 bis 4 die Wandung 5 vor dem Abbiegen der Flächenteile 520, 530, 540, 550. Die Figuren 5 bis 11 zeigen die fertig gestellte Wandung 5 mit den Versteifungselementen 52, 53, 54, 55.

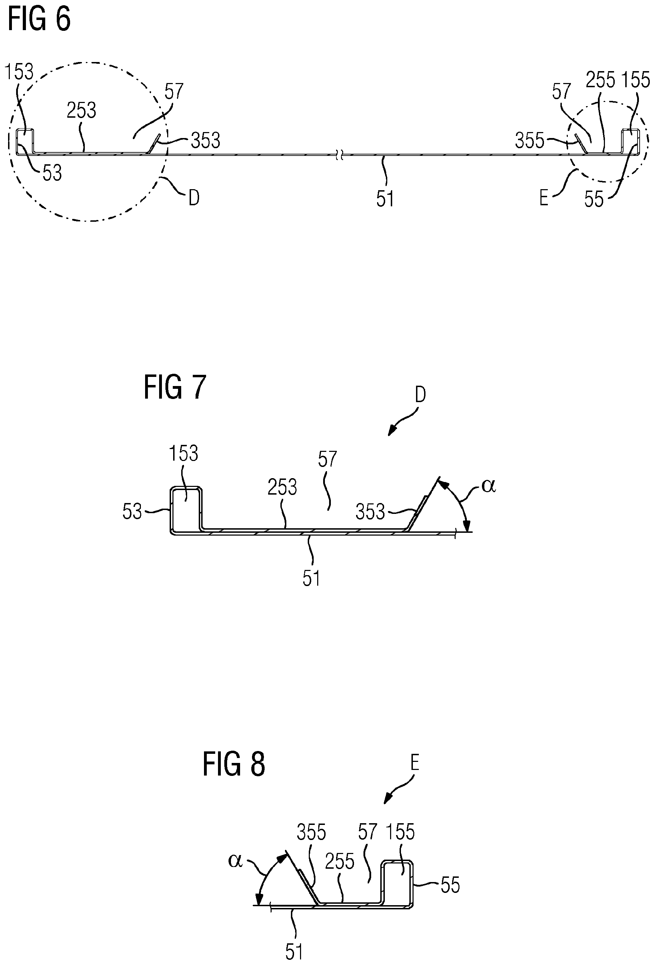

Insbesondere aus den Figuren 6 bis 10 ist ersichtlich, dass bei jedem dieser Versteifungselemente 52, 53, 54, 55 durch die abgebogenen Flächenteile jeweils ein Hohlprofil 152, 153, 154, 155 und ein sich an das Hohlprofil anschließender, parallel zur Verkleidungswand 51 verlaufender Verbindungsschenkel 252, 253, 254, 255 gebildet sind. Es ist außerdem ersichtlich, dass die Verbindungsschenkel 252, 253, 254, 255, die mit der Verkleidungswand 51 jeweils eine Überlappung bilden, jeweils durch Stoff- und/oder Kraftschluss (z. B. durch Kleben oder Punktschweißen) so mit der Verkleidungswand 51 verbunden sind, dass jedes der Hohlprofile 152, 153, 154, 155 an seinem Umfang geschlossen ist.

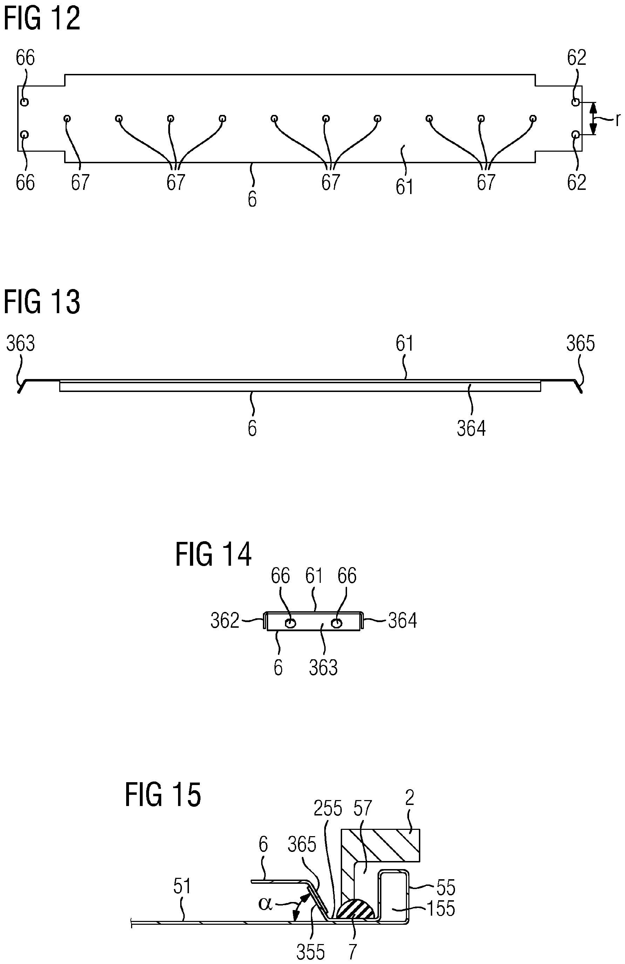

Bei jedem der Versteifungselemente 52, 53, 54, 55 ist durch die abgebogenen Flächenteile zusätzlich zu dem Hohlprofil 152, 153, 154, 155 und dem Verbindungsschenkel 252, 253, 254, 255 jeweils ein sich an den Verbindungsschenkel 252, 253, 254, 255 anschließender, unter einem Winkel α von 60° schräg zur Verkleidungswand 51 verlaufender Befestigungsschenkel 352, 353, 354, 355 gebildet. Den Befestigungsschenkeln 352, 353, 354, 355 der Versteifungselemente 52, 53, 54, 55 sind Befestigungsschenkel 362, 363, 364, 365 (vgl. Figuren 13 und 14) der Querverbindungen (der Fachwerk-Querträger 6) zugeordnet.

Die Hohlprofile 152, 153, 154, 155 und die Verbindungsschenkel 252, 253, 254, 255 benachbarter der Versteifungselemente 52, 53, 54, 55 sind - an den vier Ecken jeweils in einem Winkel β von 45°stirnseitig aufeinander treffend - durch Ausschweißen miteinander verbunden. Dadurch bilden die Versteifungselemente 52 bis 55 nach dem Ausschweißen gemeinsam einen hier rechteckigen Versteifungsstrang, der geschlossenen und umlaufend ausgebildet ist. Das Ausschweißen der vier Ecken ist gerade deshalb auf so einfache Weise möglich und führt gerade deshalb zu einer besonders festen Verbindung, weil die Hohlprofile und die Verbindungsschenkel nach dem mehrfachen Abbiegen an den vier Ecken in Form einer Gehrung aufeinander treffen.

Im Bereich der Überlappung sind zusätzliche Bauteile integriert. Eines der zusätzlichen Bauteile ist eine in der Figur 15 gezeigte Dichtung 7. Als weitere zusätzliche Bauteile sind zwei Riegelstangenführungen vorgesehen. Diese sind im Bereich der Überlappung von hier nicht dargestellten abgebogenen Laschen des Verbindungsschenkels 253 gebildet.

Bei der ersten Ausführungsform 3 des Verkleidungsteils, bei der die Querverbindungen als Fachwerk-Querträger 6 ausgebildet sind, ist eine parallel zur Verkleidungswand 51 verlaufende Montagefläche 61 der Fachwerk-Querträger um ein mehrfaches kleiner als die Fläche der Verkleidungswand 51 selbst.

Dabei sind die Befestigungsschenkel 352 bis 355 der Versteifungselemente 52 bis 55 und die ihnen zugeordneten Befestigungsschenkel 362 bis 365 der Fachwerk-Querträger 6 mit Befestigungsöffnungen 56 bzw. 66 versehen, die in einem vorgegebenen Rastermaß r angeordneten sind. Die Fachwerk-Querträger 6 können somit insbesondere in horizontaler Richtung in unterschiedlichen Positionen an den Versteifungselementen befestigt werden können. Dabei dienen die Befestigungsöffnungen 56 bzw. 66 als Aufnahmen für hier nicht weiter dargestellte, insbesondere als Schrauben ausgebildete Befestigungsmittel.

Die Position der einzelnen Querverbindungen in Form der Fachwerk-Querträger 6 kann also jeweils vom Anwender über ein von den Befestigungsöffnungen 56 bzw. 66 gebildetes Lochmuster selbst bestimmt werden. Das Lochmuster kann dabei zugleich auch zum Anbringen eines PE-Leiters (einer Erdung) dienen.

Die Querverbindungen können auch andere Ausprägungen haben, so dass sich neben der in Figur 1 gezeigten ersten bevorzugten Ausführungsform 3, weitere bevorzugte Ausführungsformen 30; 300 des neuen Verkleidungsteils ergeben. Die Querverbindungen können in weiterer bevorzugter Weise gemeinsam mit der Verkleidungswand 51 auch eine Doppelwand oder eine mehrschichtige Wand nach Art eines Sandwiches bilden.

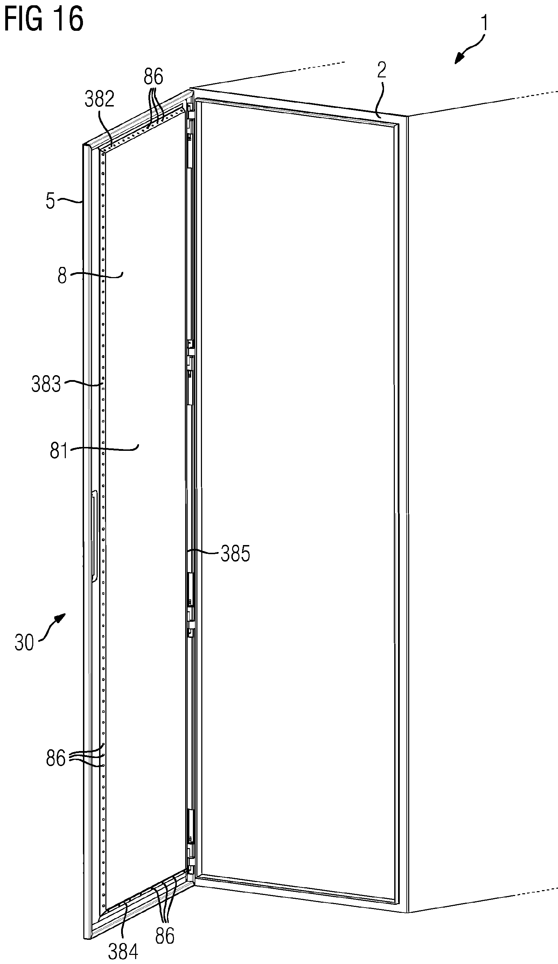

Die der in Figur 16 gezeigte zweite Ausführungsform 30 des Verkleidungsteils weist ebenfalls die Wandung 5 auf, wie sie in den Figuren 2 bis 11 gezeigt ist. Die Querverbindung ist hier jedoch zur Bildung der Doppelwand als vollflächige Rückwand 8 ausgebildet. Eine parallel zur Verkleidungswand 51 verlaufende Montagefläche 81 dieser vollflächigen Rückwand 8 ist im Wesentlichen so groß wie die Fläche der Verkleidungswand 51 der Wandung 5. Die vollflächigen Rückwand 8 weist Befestigungsschenkel 382 bis 385 auf, mittels derer sie mit den Befestigungsschenkel 352, 353, 354, 355 (vgl. Figur 5) der Versteifungselemente 52, 53, 54, 55 - insbesondere durch Stoff- und/oder Kraftschluss - verbunden ist. Bei der dargestellten Rückwand 8 sind die Befestigungsschenkel 382 bis 385 mit in dem vorgegebenen Rastermaß r angeordneten Befestigungsöffnungen 86 versehen, die gemeinsam mit den Befestigungsöffnungen 56 Aufnahmen für hier nicht weiter dargestellte, insbesondere als Schrauben ausgebildete Befestigungsmittel bilden.

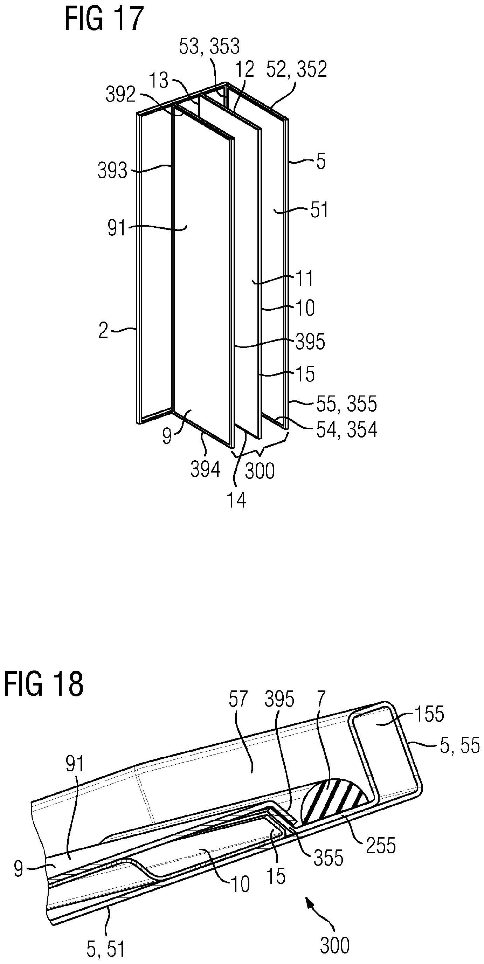

Die in den Figur 17 und 18 gezeigte dritte Ausführungsform 300 des Verkleidungsteils weist auch die Wandung 5 auf, wie sie in den Figuren 2 bis 11 gezeigt ist. Zur Bildung der mehrschichtigen Wand nach Art eines Sandwiches besteht hier die Querverbindung aus einer vollflächigen Rückwand 9 und einer Kernschicht 10, wobei die Kernschicht 10 zwischen der Wandung 5 und der Rückwand 9 angeordnet ist. Eine parallel zur Verkleidungswand 51 verlaufende Montagefläche 91 dieser vollflächigen Rückwand 9 und eine parallel dazu verlaufende Fläche 11 der Kernschicht 10 sind im Wesentlichen so groß wie die Fläche der Verkleidungswand 51 der Wandung 5. Zusätzlich zu dieser Kernschicht können weitere Kernschichten vorgesehen werden. Die vollflächigen Rückwand 9 weist Befestigungsschenkel 392 bis 395 auf. Die Kernschicht 10 weist ihrerseits Befestigungsschenkel 12 bis 15 auf. Mittels ihrer Befestigungsschenkel 392 bis 395 bzw. 12 bis 15 sind die Rückwand 9 und die Kernschicht 10 mit den Befestigungsschenkeln 352, 353, 354, 355 (vgl. Figur 5) der Versteifungselemente 52, 53, 54, 55 - insbesondere durch Stoff- und/oder Kraftschluss - verbunden ist. Bei der dargestellten dritten Ausführungsform 300 des Verkleidungsteils sind die Befestigungsschenkel 392 bis 395 bzw. 12 bis 15 mit den Befestigungsschenkel 352, 353, 354, 355 verklebt.

Bei der gezeigten Ausführungsform 300 des Verkleidungsteils ist die Kernschicht trapezförmig gewellt.

Ein erstes wesentliches gemeinsames Merkmal der drei gezeigten Ausführungsformen 3, 30 und 300 des erfindungsgemäßen Verkleidungsteiles ist die umlaufende und randseitig geschlossene Profilform der Wandung 5, die einen geschlossenen umlaufenden Versteifungsstrang in Form eines im Querschnitt rechteckigen Rohres bildet. Durch diese Profilform können die auftretenden Kräfte von der Verkleidungswand 51 besser auf den von den Versteifungselementen 52 bis 55 gebildeten Versteifungsstrang übertragen werden. Im Vergleich zu den einseitig offenen Versteifungselementen, wie sie aus der Druckschrift EP 2 101 019 A2 bekannt sind, bewirkt diese geschlossene Profilform eine höhere Stabilität der jeweiligen Ausführungsform 3; 30; 300 des Verkleidungsteils bei annähernd gleichem Materialeinsatz.

Weiterhin ist bei den drei gezeigten Ausführungsformen 3; 30; 300 des erfindungsgemäßen Verkleidungsteiles wesentlich, dass sich im Ergebnis des gezeigten mehrfachen Abbiegens der Flächenteile 520, 530, 540 und 550 der Wandung 5 - also im Ergebnis der gezeigten mehrfachen Faltung (Kantung) - im Bereich der Überlappung eine Wanne 57 ergibt, in die zusätzliche Bauteile integriert sind. Zum Einen wird die Wanne 57 zur Führung der Dichtung 7 genutzt. Der Verlauf des Dichtmaterials der Dichtung 7 kann dadurch besser kontrolliert werden. Zum Anderen kann in der Wanne 57 eine von den zwei Riegelstangenführungen gehaltene Riegelstange aufgenommen sein, die hier ebenfalls nicht dargestellt ist. Dadurch, dass die beiden Riegelstangenführungen von abgebogenen Laschen des Verbindungsschenkels 253 gebildet sind, brauchen diese nicht - wie sonst üblich (vgl. EP 2 101 019 A2, dort die Figur 1) - extra anschweißt zu werden. Diese Verfahrensweise der Bauteileintegrationen verschafft sowohl Kosten- als auch Stabilitätsvorteile.

Der ins Innere der Umkleidung weisende Teil der Kantung, der die Befestigungsschenkel 352, 353, 354, 355 bildet, dient bei den drei gezeigten Ausführungsformen 3; 30; 300 des erfindungsgemäßen Verkleidungsteiles jeweils zur Befestigung der Querverbindungen. Um diese Querverbindungen mit Handwerkzeugen besser zugänglich zu machen, verlaufen die Befestigungsschenkel der Wandung 5 und die Befestigungsschenkel der Querverbindungen unter dem Winkel α von 60° schräg zur Verkleidungswand 51.

Die Funktionalität der Verkleidungsteile wird durch die Querverbindungen 6; 8; 9, 10 erhöht, da Anwender an der nach innen weisenden Seite der Querverbindungen beispielsweise mittels dort ausgebildeter Aufnahmeöffnungen 67 (vgl. Figur 12) hier nicht weiter gezeigte Anbauteile (Rückanbauten) anbringen können.

Die erste Ausführungsform 3 des neuen Verkleidungsteis zeichnet sich gegenüber dem aus der Druckschrift EP 2 101 019 A2 bekannten Verkleidungsteil durch eine erhöhte Funktionalität und Stabilität aus. Sie stellt eine kostengünstige Variante dar, bei der außerdem ein Schweißbolzen zum Anbringen eines PE-Leiters entfällt.

Die zweite Ausführungsform 30 des Verkleidungsteils stellt eine sehr biegesteife Variante dar, die über die vollwandige (vollflächige) Rückwand 8 erzielt wird, welche über die Aufnahmen und die Befestigungsmittel durchgängig mit der Wandung 5 verbunden ist. An der ins Innere der Umkleidung weisenden Seite der vollwandigen (vollflächigen) Rückwand können Anbauteile (Rückanbauten) platziert werden, ohne dies auf der nach außen weisenden Seite der Wandung 5 sichtbar zu machen. Auch bei dieser zweiten Ausführungsform 30 ist die Stabilität erhöht, wobei die dabei gebildete Doppelwand funktionale Vorteile für die genannten Rückanbauten offeriert. Die zweite Ausführungsform 30 stellt einen guten wirtschaftlichen und technischen Kompromiss zwischen der ersten Ausführungsform 3 und der dritten Ausführungsform 300 dar.

Die dritten Ausführungsform 300 des Verkleidungsteils stellt im Wesentlichen eine Erweiterung der zweiten Ausführungsform 30 um die Kernschicht 10 dar. Über diese mit einer Kernschicht versehene Bauform (Sandwichbauweise) der dritten Ausführungsform lassen sich hochfeste Türvarianten fabrizieren. Durch die Sandwichbauweise ergeben sich drei oder mehr Schichten, welche miteinander verklebt werden. Die Kernschicht kann verschiedene Ausprägungen haben. Diese muss nicht zwingend trapezförmig (wie abgebildet) gestaltet sein. Die dritte Ausführungsform 300 zeichnet sich durch eine extreme Biegesteifigkeit aus. Sie ist jedoch in ihrer Konstruktion etwas kostenintensiver.

## Patentansprüche

1. Verkleidungsteil (3; 30; 300) zum Öffnen und Schließen einer Umkleidung einer Stromverteilereinheit (1), insbesondere Tür oder Fenster für eine Stromverteilereinheit (1), mit einer Wandung (5), die eine Verkleidungswand (51) und an zumindest zwei Seiten der Verkleidungswand (51) jeweils ein Versteifungselement (52, 53, 54, 55) für die Verkleidungswand (51) bildet, wobei jedes der Versteifungselemente (52, 53, 54, 55) durch mehrfaches Abbiegen von Flächenteilen (520, 530, 540, 550) der Wandung (5) an jeweils einer der zumindest zwei Seite der Verkleidungswand (51) geformt ist,
wobei bei jedem der Versteifungselemente (52, 53, 54, 55) durch die abgebogenen Flächenteile (520, 530, 540, 550) jeweils ein Hohlprofil (152, 153, 154, 155) und ein sich an das Hohlprofil (152, 153, 154, 155) anschließender, parallel zur Verkleidungswand (51) verlaufender Verbindungsschenkel (252, 253, 254, 255) gebildet ist, wobei jeweils der Verbindungsschenkel (252, 253, 254, 255) und die Verkleidungswand (51) eine Überlappung bildend durch Stoff- und/oder Kraftschluss so verbunden sind, dass das Hohlprofil (152, 153, 154, 155) am Umfang geschlossen ist,
**dadurch gekennzeichnet, dass** bei jedem der Versteifungselemente (52, 53, 54, 55) durch die abgebogenen Flächenteile (520, 530, 540, 550) zusätzlich zu dem Hohlprofil (152, 153, 154, 155) und dem Verbindungsschenkel (252, 253, 254, 255) ein sich an den Verbindungsschenkel (252, 253, 254, 255) anschließender, unter einem Winkel (α) schräg zur Verkleidungswand (51) verlaufender Befestigungsschenkel (352, 353, 354, 355) gebildet ist, wobei die Befestigungsschenkel (352, 353, 354, 355) der zumindest zwei Versteifungselemente (52, 53, 54, 55) mittels zumindest einer Querverbindung (6; 8; 9, 10) miteinander verbunden sind.

2. Verkleidungsteil (3; 30; 300) nach Anspruch 1,
**dadurch gekennzeichnet, dass** die Hohlprofile (152, 153, 154, 155) und/oder die Verbindungsschenkel (252, 253, 254, 255) der zumindest zwei Versteifungselemente (52, 53, 54, 55) an einer ersten Ecke in einem Winkel (β) stirnseitig aufeinander treffend, insbesondere durch Ausschweißen, verbunden sind.

3. Verkleidungsteil (3; 30; 300) nach einem der Ansprüche 1 bis 2,
**dadurch gekennzeichnet, dass** die Wandung (5) an allen Seiten der Verkleidungswand (51) jeweils ein Versteifungselement (52, 53, 54, 55) für die Verkleidungswand (51) bildet,
wobei jedes der Versteifungselemente (52, 53, 54, 55) durch mehrfaches Abbiegen von Flächenteilen (520, 530, 540, 550) der Wandung (5) an jeweils einer der Seiten der Verkleidungswand (51) geformt ist,
wobei bei jedem der Versteifungselemente (52, 53, 54, 55) durch die abgebogenen Flächenteile (520, 530, 540, 550) jeweils ein Hohlprofil (152, 153, 154, 155) und ein sich an das Hohlprofil (152, 153, 154, 155) anschließender, parallel zur Verkleidungswand (51) verlaufenden Verbindungsschenkel (252, 253, 254, 255) gebildet ist,
wobei die Verbindungsschenkel (252, 253, 254, 255) und die Verkleidungswand (51) eine Überlappung bildend durch Stoff- und/oder Kraftschluss so verbunden sind, dass die Hohlprofile (152, 153, 154, 155) am Umfang geschlossen sind und
wobei die Hohlprofile (152, 153, 154, 155) und/oder die Verbindungsschenkel (252, 253, 254, 255) benachbarter der Versteifungselemente (52, 53, 54, 55) an Ecken in einem Winkel (β) stirnseitig aufeinander treffend, insbesondere durch Ausschweißen, verbunden sind, so dass die Versteifungselemente (52, 53, 54, 55) einen geschlossenen umlaufenden Versteifungsstrang bilden.

4. Verkleidungsteil (3; 30; 300) nach einem der Ansprüche 1 bis 3,
**dadurch gekennzeichnet, dass** im Bereich der Überlappung zusätzliche Bauteile integriert sind.

5. Verkleidungsteil (3; 30; 300) nach Anspruch 4,
**dadurch gekennzeichnet, dass** zumindest zwei der zusätzlichen Bauteile als Riegelstangenführungen ausgebildet sind.

6. Verkleidungsteil (3; 30; 300) nach Anspruch 5,
**dadurch gekennzeichnet, dass** das die Riegelstangenführungen von abgebogenen Laschen zumindest eines (253) der Verbindungsschenkel gebildet sind.

7. Verkleidungsteil (3; 30; 300) nach Anspruch 4, **dadurch gekennzeichnet, dass** zumindest eines der zusätzlichen Bauteile als Dichtung (7) ausgebildet ist.

8. Stromverteilereinheit (1) mit einer aus Verkleidungsteilen gebildeten Umkleidung, bei der zumindest eines (3; 30; 300) der Verkleidungsteile, insbesondere ein Fenster oder eine Für, zum Öffnen und Schließen der Umkleidung geeignet ist,
**dadurch gekennzeichnet, dass** das zumindest eine zum Öffnen und Schließen der Umkleidung geeignete Verkleidungsteil (3; 30; 300) nach einem der Ansprüche 1 bis 7 ausgebildet ist.

## Claims

1. Covering part (3; 30; 300) for opening and closing a casing for a current-distributor unit (1), in particular a door or a window for a current-distributor unit (1), having a wall (5) which forms a cover wall (51) and, on at least two sides of the cover wall (51), in each case one stiffening element (52, 53, 54, 55) for the cover wall (51), wherein each of the stiffening elements (52, 53, 54, 55) is shaped by multiple bending of planar parts (520, 530, 540, 550) of the wall (5) on in each case one of the at least two sides of the cover wall (51),
wherein in the case of each of the stiffening elements (52, 53, 54, 55) in each case one hollow section (152, 153, 154, 155) and one connection leg (252, 253, 254, 255) that adjoins the hollow section (152, 153, 154, 155) and runs parallel with the cover wall (51) is formed by way of the bent planar parts (520, 530, 540, 550), wherein in each case the connection leg (252, 253, 254, 255) and the cover wall (51), while forming an overlap, are connected by way of a materially integral and/or force-fitting connection such that the hollow section (152, 153, 154, 155) is closed on the circumference,
**characterized in that**
in the case of each of the stiffening elements (52, 53, 54, 55) by way of the bent planar parts (520, 530, 540, 550), in addition to the hollow section (152, 153, 154, 155) and to the connection leg (252, 253, 254, 255), a fastening leg (352, 353, 354, 355) that adjoins the connection leg (252, 253, 254, 255) and runs obliquely to the cover wall (51) at an angle (α) is formed, wherein the fastening legs (352, 353, 354, 355) of the at least two stiffening elements (52, 53, 54, 55) are interconnected by means of at least one transverse connection (6; 8; 9, 10).

2. Cover part (3; 30; 300) according to Claim 1,
**characterized in that**
the hollow sections (152, 153, 154, 155) and/or the connection legs (252, 253, 254, 255) of the at least two stiffening elements (52, 53, 54, 55) while mutually converging by way of the end side at an angle (β) at a first corner are connected in particular by welding.

3. Cover part (3; 30; 300) according to one of Claims 1 to 2,
**characterized in that**
the wall (5) on all sides of the cover wall (51) in each case forms one stiffening element (52, 53, 54, 55) for the cover wall (51), wherein each of the stiffening elements (52, 53, 54, 55) is shaped by multiple bending of planar parts (520, 530, 540, 550) of the wall (5) on in each case one of the sides of the cover wall (51),
wherein in the case of each of the stiffening elements (52, 53, 54, 55) in each case one hollow section (152, 153, 154, 155) and one connection leg (252, 253, 254, 255) that adjoins the hollow section (152, 153, 154, 155) and runs parallel with the cover wall (51) is formed by way of the bent planar parts (520, 530, 540, 550),
wherein the connection legs (252, 253, 254, 255) and the cover wall (51), while forming an overlap, are connected by way of a materially integral and/or force-fitting connection such that the hollow sections (152, 153, 154, 155) are closed on the circumference,
wherein the hollow sections (152, 153, 154, 155) and/or the connection legs (252, 253, 254, 255) of neighbouring stiffening elements (52, 53, 54, 55) are connected in particular by welding while mutually converging by way of the end side at an angle (β) at corners such that the stiffening elements (52, 53, 54, 55) form a closed encircling stiffening strand.

4. Cover part (3; 30; 300) according to one of Claims 1 to 3,
**characterized in that**
additional components are integrated in the region of the overlap.

5. Cover part (3; 30; 300) according to Claim 4,
**characterized in that**
at least two of the additional components are configured as lock-bar guides.

6. Cover part (3; 30; 300) according to Claim 5,
**characterized in that**
the lock-bar guides are formed by bent tabs of at least one (253) of the connection legs.

7. Cover part (3; 30; 300) according to Claim 4,
**characterized in that**
at least one of the additional components is configured as a seal (7).

8. Current-distributor unit (1) having a casing formed from cover parts, in which at least one (3; 30; 300) of the cover parts, in particular a window or a door, is suitable for closing and opening the casing,
**characterized in that**
the at least one cover part (3; 30; 300) that is suitable for opening and closing the casing is configured according to one of Claims 1 to 7.

## Revendications

1. Élément d'habillage (3; 30; 300) destiné à ouvrir et fermer une enveloppe d'une unité de distribution de courant (1), notamment porte ou fenêtre d'unité de distribution de courant (1), comprenant une paroi (5) qui constitue une paroi d'habillage (51) et un élément de renforcement (52, 53, 54, 55) pour la paroi d'habillage (51), respectivement, sur au moins deux côtés de la paroi d'habillage(51), chacun des éléments de renforcement (52, 53, 54, 55) étant formé par pliage multiple de parties de surface (520, 530, 540, 550) de la paroi (5) au niveau respectivement d'un des au moins deux côtés de la paroi d'habillage (51),
dans lequel, pour chacun des éléments de renforcement (52, 53, 54, 55), les parties de surface (520, 530, 540, 550) pliées forment à chaque fois un profil creux (152, 153, 154, 155) et une branche de jonction (252, 253, 254, 255) s'étendant parallèlement à la paroi d'habillage (51) de manière contiguë au profil creux (152, 153, 154, 155), la branche de jonction (252, 253, 254, 255) et la paroi d'habillage (51), formant un chevauchement, étant à chaque fois assemblées par adhésion et/ou par friction, de sorte que le profil creux (152, 153, 154, 155) est fermé sur sa circonférence,
**caractérisé en ce que**,
pour chacun des éléments de renforcement (52, 53, 54, 55), les parties de surface (520, 530, 540, 550) pliées forment, en plus du profil creux (152, 153, 154, 155) et de la branche de jonction (252, 253, 254, 255), une branche de fixation (352, 353, 354, 355) faisant suite à la branche de jonction (252, 253, 254, 255) et s'étendant obliquement selon un angle (α) par rapport à la paroi d'habillage (51), les branches de fixation (352, 353, 354, 355) des au moins deux éléments de renforcement (52, 53, 54, 55) étant reliées l'une à l'autre au moyen d'au moins une entretoise (6; 8; 9; 10).

2. Élément d'habillage (3; 30; 300) selon la revendication 1,
**caractérisé en ce que** les profils creux (152, 153, 154, 155) et/ou les branches de jonction (252, 253, 254, 255) des au moins deux éléments de renforcement (52, 53, 54, 55) sont reliés au niveau d'un premier coin, leurs côtés frontaux se rencontrant suivant un angle (ß), notamment au moyen d'un soudage.

3. Élément d'habillage (3; 30; 300) selon l'une des revendications 1 à 2,
**caractérisé en ce que** la paroi (5) constitue sur tous les côtés de la paroi d'habillage (51), à chaque fois, un élément de renforcement (52, 53, 54, 55) pour la paroi d'habillage (51),
chacun des éléments de renforcement (52, 53, 54, 55) étant formé par pliage multiple de parties de surface (520, 530, 540, 550) de la paroi (5) au niveau respectivement d'un des côtés de la paroi d'habillage (51),
dans lequel, pour chacun des éléments de renforcement (52, 53, 54, 55), les parties de surface (520, 530, 540, 550) pliées forment à chaque fois un profil creux (152, 153, 154, 155) et une branche de jonction (252, 253, 254, 255) s'étendant parallèlement à la paroi d'habillage (51) de manière contiguë au profil creux (152, 153, 154, 155),
les branches de jonction (252, 253, 254, 255) et la paroi d'habillage (51), formant un chevauchement, étant assemblées par adhésion et/ou par friction, de sorte que les profils creux (152, 153, 154, 155) sont fermés sur leur circonférence et
les profils creux (152, 153, 154, 155) et/ou les branches de jonction (252, 253, 254, 255) d'éléments de renforcement (52, 53, 54, 55) contigus étant reliés au niveau des coins, leurs côtés frontaux se rencontrant suivant un angle (ß), notamment au moyen d'un soudage, de sorte que les éléments de renforcement (52, 53, 54, 55) forment un cordon de renforcement périphérique fermé.

4. Élément d'habillage (3; 30; 300) selon l'une des revendications 1 à 3, **caractérisé en ce que** des éléments de construction supplémentaires sont intégrés dans la zone du chevauchement.

5. Élément d'habillage (3; 30; 300) selon la revendication 4,
**caractérisé en ce qu'**au moins deux des éléments de construction supplémentaires sont exécutés en tant que glissières de barre de verrouillage.

6. Élément d'habillage (3; 30; 300) selon la revendication 5,
**caractérisé en ce que** les glissières de barre de verrouillage sont formées par des pattes pliées d'au moins une (253) des branches de jonction.

7. Élément d'habillage (3; 30; 300) selon la revendication 4,
**caractérisé en ce qu'**au moins un des éléments de construction supplémentaires est exécuté en tant que joint d'étanchéité (7).

8. Unité de distribution de courant (1) comprenant une enveloppe formée d'éléments d'habillage, dans laquelle au moins un (3; 30; 300) des éléments d'habillage, notamment une fenêtre ou une porte, est approprié pour ouvrir et fermer l'enveloppe,
**caractérisée en ce que** l'au moins un élément d'habillage (3; 30; 300) approprié pour ouvrir et fermer l'enveloppe est exécuté selon l'une des revendications 1 à 7.
